(19) **Europäisches Patentamt**
**European Patent Office**
**Office européen des brevets**

(11) **EP 4 348 211 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22726579.0**

(22) Anmeldetag: **23.05.2022**

(51) Internationale Patentklassifikation (IPC):
***G01M 13/025*** (2019.01)

(52) Gemeinsame Patentklassifikation (CPC):
**G01M 13/025**

(86) Internationale Anmeldenummer:
**PCT/AT2022/060177**

(87) Internationale Veröffentlichungsnummer:
**WO 2022/246487 (01.12.2022 Gazette 2022/48)**

(54) **VERFAHREN ZUR REGELUNG EINER PRÜFSTANDSANORDNUNG**

PROCEDURE FOR CONTROLLING A TEST BENCH ARRANGEMENT

PROCÉDURE DE CONTRÔLE D'UN DISPOSITIF DE BANC D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2021 AT 504132021**

(43) Veröffentlichungstag der Anmeldung:
**10.04.2024 Patentblatt 2024/15**

(73) Patentinhaber: **AVL List GmbH**
**8020 Graz (AT)**

(72) Erfinder: **FANK, Daniel**
**8020 Graz (AT)**

(74) Vertreter: **Patentanwälte Pinter & Weiss OG**
**Prinz-Eugen-Straße 70**
**1040 Wien (AT)**

(56) Entgegenhaltungen:
WO-A1-2021/026578  AT-A4- 519 092
AT-B1- 522 354  DE-A1- 102020 104 314

**Beschreibung**

Die gegenständliche Erfindung betrifft ein Verfahren zur Regelung einer Prüfstandsanordnung, bei welcher ein rotierender Prüfling über eine mechanische Wellenverbindung mit einer rotierenden Belastungsmaschine verbunden wird und bei der zumindest eine in der Prüfstandsanordnung vorherrschende Winkelgeschwindigkeit gemessen wird, wobei das rotatorische Verhalten der Prüfstandsanordnung und damit das dynamische Verhalten zumindest der gemessenen Winkelgeschwindigkeit und einer im Prüfling vorherrschenden Prüflingswinkelgeschwindigkeit mit einem ersten Differentialgleichungssystem modelliert wird.

Seit langem stellen Prüfstände in den vielfältigsten technologischen Anwendungsgebieten ein nicht mehr wegzudenkendes Hilfsmittel dar. In einem besonderen Maß trifft dieser Umstand auf die Automobilindustrie zu, wo Trends wie die Elektrifizierung des Antriebsstranges bei stets kürzer werdenden Innovationszyklen fortlaufend zu neuen prüftechnischen Herausforderungen führen. Hervorzuheben sind in diesem Zusammenhang die Forderungen nach geringeren Kosten, höherer Flexibilität, kürzeren Rüstzeiten und höherer Dynamik, die sich bei vielen dieser neuen prüftechnischen Herausforderungen als dominierende Faktoren auszeichnen.

Zwischen den genannten Faktoren können mehrere Parallelen festgemacht werden. Zunächst können Kosten vor allem durch eine Reduktion von in einem Prüfstand verbauter Hardware gesenkt werden. Diesbezüglich sind besonders messtechnische und sensorische Vorrichtungen zu nennen, die in vielen Fällen einerseits als teure Komponenten zu werten sind, andererseits den Implementierungs-, Inbetriebnahme- und Wartungsaufwand eines Prüfstandes merklich erhöhen können. Weiters gilt in einer überwiegenden Zahl von Anwendungsfällen, dass eine reduzierte Zahl an Sensoren die Flexibilität eines Prüfstandes merklich erhöhen kann. Maßgebend für diesen Zusammenhang ist ein üblicherweise mit reduzierter Sensorik einhergehender reduzierter Verkabelungsaufwand, der insbesondere bei Umbauten und/oder Adaptionen von Prüfstandshardware vorteilhaft sein kann. Aus den gleichen Gründen erlaubt eine geringere Anzahl an Sensoren vielfach auch eine Verkürzung von beim Wechsel von Prüflingen auftretenden Rüstzeiten.

Der vierte erwähnte Faktor, die Forderung nach höherer Dynamik, führt demgegenüber in vielen Fällen zu einem anderen Schluss hinsichtlich der Anzahl an vorzusehenden Sensoren. Unter "Dynamik" versteht man dabei Änderungen von nicht eingeschwungenen Betriebszuständen, d.h. Änderungen gewisser Größen der Prüfstandsanordnung, wie beispielsweise einer Drehzahl oder eines Drehmoments, in kurzen Zeitabständen, beispielsweise im Millisekunden- oder sogar Mikrosekundenbereich. Dabei können auch große Änderungen solcher Größen vorkommen. Für einen hochdynamischen Betrieb eines Prüfstands ist es oftmals von entscheidender Bedeutung, möglichst exakt über den Zustand eines Prüfstandes informiert zu sein, um letztendlich auch eine hochdynamische Regelung der Prüfstandsanordnung zu ermöglichen. In diesem Zusammenhang kann jede zusätzliche Messgröße hilfreich oder sogar notwendig sein. Dieses Spannungsfeld hinsichtlich der Anzahl an vorzusehenden Sensoren tritt in den verschiedensten prüftechnischen Anwendungen auf.

So wird bei Antriebsstrangprüfständen ein zu testender Antriebsstrang als Prüfling am Prüfstand angeordnet und üblicherweise über mehrere mechanische Verbindungswellen mit zumindest einer Belastungsmaschine (Dynamometer) verbunden. Das Antriebsaggregat des Antriebsstranges, z.B. ein Verbrennungsmotor und/oder ein Elektromotor, arbeitet dann am Prüfstand gegen die zumindest eine Belastungsmaschine, um verschiedene, im Realbetrieb zu erwartende Belastungszustände zu testen. Ein solcher Antriebsstrangprüfstand mit mehreren Belastungsmaschinen ist beispielsweise aus der DE 10 2008 041 883 A1 bekannt. In derartigen Fällen ist es vielfach hilfreich, genau über die von den Belastungsmaschinen abgegebenen Drehmomente Bescheid zu wissen, unter anderem um Querbeeinflussungen zwischen den Belastungsmaschinen zu vermeiden.

Bei Motorprüfständen ist demgegenüber üblicherweise nur ein einzelnes Antriebsaggregat, z.B. ein Verbrennungsmotor und/oder ein Elektromotor, als Prüfling vorgesehen und mittels einer Wellenverbindung mit einer Belastungsmaschine (Dynamometer) verbunden. Ein in derartigen Fällen hervorzuhebendes Beispiel für einen Betriebsmodus, in dem zusätzliche Messinformation von entscheidender Bedeutung sein kann, ist die sogenannte Dämpfungsregelung, wie sie beispielsweise aus der AT 519092 A4 bekannt ist. Dabei ist ein übliches Ziel, aus der aktuellen Drehzahl des Prüflings, in der Folge auch als "Prüflingsdrehzahl" bezeichnet, und/oder dem vom Prüfling erzeugten Prüflingsdrehmoment einen dämpfenden Anteil eines zur Prüfstandsregelung verwendeten Stellsignals zu bestimmen. Messgrößen von Prüflingsdrehzahl und/oder Prüflingsdrehmoment vereinfachen in diesem Fall die Umsetzung des Regelungskonzeptes signifikant.

Neben dem Wunsch, teure und aufwendige Sensorik aus Kosten- und Effizienzgründen zu reduzieren, tritt häufig der Fall ein, dass es schlicht nicht möglich ist, bestimmte Messgrößen, wie etwa den Drehwinkel eines Prüflings, dessen Drehzahl oder das von ihm erzeugte Prüflingsdrehmoment, mit einer ausreichenden Genauigkeit zu messen, obwohl dadurch klare Verbesserungen des Betriebsverhaltens eines Prüfstands möglich wären. Entweder sind keine dazu erforderlichen Sensoren verfügbar oder der hohe Aufwand, den die Installation und die Verwendung bekannter Sensoren mit sich bringen würde, verunmöglicht einen Einsatz. Überdies müssen vielfach auch Prüflinge getestet werden, die den Abgriff von Messwerten von interessierenden Größen grundsätzlich nicht zulassen oder in denen eine entsprechende Messung nicht vorgesehen ist. Ein Beispiel hierfür ist das erzeugte innere Drehmoment eines Verbrennungsmotors oder Elektromotors, also nicht das tatsächlich an der Ausgangswelle abgegebene Drehmoment, sondern das tatsächlich erzeugte Drehmoment. Dieses innere Drehmoment kann vielfach nicht direkt gemessen werden.

Aus den genannten Gründen finden sich im Stand der Technik mehrere Ansätze, in denen in realen Prüfstandsumgebungen nicht vorhandene Sensoren durch sogenannte virtuelle Sensoren ersetzt werden. Üblicherweise wird dazu rechnerisch, vielfach unter Einsatz der in der Regelungstechnik wohlbekannten Beobachtertechnik, von vorhanden Messgrößen auf gewünschte, allerdings nicht direkt verfügbare Messgrößen geschlossen. So erzeugte Messsignale werden oft als virtuelle Messsignale bezeichnet.

In diesem Zusammenhang beschreibt der Fachartikel "Nonlinear Observers for Closed-Loop Control of a Combustion Engine Test Bench", G. Reale et al., American Control Conference (2009) 4648-4653, den Einsatz verschiedener Zustandsbeobachter bei einem Verbrennungsmotorprüfstand. Dabei werden anhand der vorgestellten Zustandsbeobachter Schätzwerte für das vom Verbrennungsmotor erzeugte innere Drehmoment, die Drehzahlen von Verbrennungsmotor und Belastungsmaschine und den Differenzwinkel zwischen Verbrennungsmotor und Belastungsmaschine ermittelt. Die genannten Drehzahlen werden im beschriebenen Fall jedoch auch messtechnisch erfasst, was deren Schätzung im Grunde obsolet macht.

Die AT 519092 A4 offenbart ein Verfahren zur Dämpfungsregelung bei einem Verbrennungsmotorprüfstand. Dabei wird auf Basis eines gemessenen Wellenmoments und einer gemessenen Prüflingsdrehzahl ein Schätzwert des inneren Prüflingsdrehmoments ermittelt, allerdings werden keine Details zu den zur Schätzung eingesetzten Modellen und zu den davon abgeleiteten Zustandsbeobachtern angegeben, was die Übertragung des vorgestellten Konzepts auf andere Prüfstandsanordnungen, wie Elektromotorenprüfstände, merklich erschwert.

Die AT 522354 A4 beschreibt die Schätzung eines in der Verbindungswelle eines Motorprüfstands wirkenden Wellenmoments. Aufbauend auf dieser Schätzung wird eine weitere Schätzung eines Prüflingsdrehmoments ermittelt, welches in einem zumindest zwei Drehmassen umfassenden Prüfling vorherrscht. Auch hier wird die konkrete Ausgestaltung des verwendeten Schätzers nicht näher beschrieben.

Die DE 102020104314 A1 beschreibt demgegenüber eine modellprädiktive Regelung eines Prüfstandes zum Prüfen von Antriebskomponenten. Darin werden insbesondere zukünftige Werte von in der Prüfstandsanordnung auftretenden Größen geschätzt, wie der Drehzahl der Verbindungswelle und der von Belastungsmaschine und Prüfling erzeugten Drehmomente. In dieser Druckschrift wird zwar ein konkretes Modell der Prüfstandsanordnung offenbart, da der Fokus der dortigen Offenbarung auf der Regelung einer Zustandsgröße der Verbindungswelle liegt, erfolgt die Modellierung des Prüflingsdrehmoments jedoch auf eine nur sehr rudimentäre Art und Weise.

Der zitierte Stand der Technik weist einige Gemeinsamkeiten auf. Ein erster auffälliger Punkt ist, dass keine der Druckschriften eine gleichzeitige Schätzung von Prüflingsdrehzahl und vom Prüfling erzeugtem Prüflingsdrehmoment beschreibt, sondern dass stets zumindest eine der beiden Größen gemessen wird. Präzise Informationen über Prüflingsdrehzahl und Prüflingsdrehmoment stellen jedoch in vielen Fällen eine Voraussetzung bei der Überwachung der in einem Prüfling umgesetzten Leistung dar, was insbesondere bei hochdrehenden Elektromotoren von entscheidender Bedeutung sein kann. Gerade bei hochdrehenden Elektromotoren ergibt sich am Prüfstand vielfach das Problem, dass die Prüfstandssteuerung weder auf Prüflingsdrehzahl noch auf Prüflingsdrehmoment zugreifen kann, die vom Prüfling umgesetzte Leistung jedoch im Prüfstandsbetrieb berücksichtigt werden muss, unter anderem um eine thermische Überlastung von oft wertvollen Prüflingen ("golden sample") zu vermeiden.

Ein weiteres Charakteristikum des zitierten Standes der Technik ist, dass kein Dokument eine Schätzung der Prüflingsdrehzahl beschreibt, bei der die geschätzte Prüflingsdrehzahl nicht ohnehin noch zusätzlich als Messgröße zur Verfügung steht. Alleine aus Sicherheitserwägungen müssen unter anderem bei Elektromotorprüfständen die oft sehr hohen Prüflingsdrehzahlen überwacht werden, was sich im Fall fehlender Messtechnik jedoch nur durch zuverlässige Schätzwerte bewerkstelligen lässt.

Überdies zeigt keine der genannten Druckschriften, wie, insbesondere im Fall von Elektromotorprüfständen, ein von einem Prüfling erzeugtes inneres Prüflingsdrehmoment für eine spätere Schätzung vorteilhaft modelliert werden kann. Daneben gilt für die aus dem Stand der Technik bekannten Modelle von Prüflingsdrehmomenten, dass weitgehend unklar ist, wie diese beispielsweise zum Zweck einer Erhöhung der Modellgenauigkeit sinnvoll erweitert werden können. Denkbare Erweiterungsansätze gehen überdies vielfach mit einer signifikant erhöhten Modellkomplexität einher, was insbesondere in der praktischen Anwendung nachteilig sein kann.

Aus den genannten Gründen ergeben sich beim praktischen Einsatz der zitierten Konzepte teils erhebliche Schwierigkeiten. Mögliche Konsequenzen dieser Schwierigkeiten können dabei von einer mangelhaften Betriebsqualität eines Prüfstandes bis hin zu einer Beschädigung von Prüfstand und/oder Prüfling reichen.

Es ist deshalb eine Aufgabe der gegenständlichen Erfindung, eine verbesserte Methode zur simultanen Schätzung einer Prüflingsdrehzahl und eines Prüflingsdrehmoments anzugeben, die insbesondere auf automotiven Prüfständen im Allgemeinen und auf Elektromotorprüfständen im Speziellen flexibel eingesetzt werden kann.

**Diese Aufgabe** wird erfindungsgemäß durch die Merkmale der unabhängigen Ansprüche gelöst. Dabei wird von einer Prüfstandsanordnung ausgegangen, bei der ein rotierender Prüfling, bevorzugt in Form eines Elektromotors, über eine mechanische Wellenverbindung mit einer rotierenden Belastungsmaschine verbunden wird und bei welcher zumindest eine in der Prüfstandsanordnung vorherrschende Drehzahl, bevorzugt jedoch die von der Belastungsmaschine angenommene Lastdrehzahl, gemessen wird.

Der erste Schritt des erfindungsgemäßen Verfahrens sieht hierbei die Modellierung des rotatorischen Verhaltens der gesamten Prüfstandsanordnung vor. Dabei wird üblicherweise das dynamische Verhalten der für das rotatorische Verhalten der Prüfstandsanordnung maßgebenden Prüfstandsgrößen, wie Lastdrehzahl, Prüflingsdrehzahl, Wellenmoment, Prüflingsdrehmoment usw. modellhaft beschrieben, zumindest wird jedoch das dynamische Verhalten der gemessenen Drehzahl und der vom Prüfling angenommenen Prüflingsdrehzahl abgebildet. Zu diesem Zweck wird ein erstes Differentialgleichungssystem angegeben, welches vorzugsweise als rotatorisches Mehrkörpersystem ausgeführt ist und das dementsprechend über zumindest zwei Drehmassen bzw. Trägheiten verfügt, die über eine Feder-Dämpfer-Element miteinander verbunden sind. Die zumindest zwei Drehmassen bzw. Trägheiten dienen hierbei der Darstellung von Prüfling und Belastungsmaschine, während das zumindest eine Feder-Dämpfer-Element die mechanische Wellenverbindung dazwischen repräsentiert. Für das erfindungsgemäße Verfahren ist an dieser Stelle von Bedeutung, dass sowohl das von der Belastungsmaschine erzeugte Lastdrehmoment, wie das vom Prüfling erzeugte Prüflingsdrehmoment Eingangsgrößen des ersten Differentialgleichungssystems darstellen. Das Lastmoment greift dabei an der die Belastungsmaschine repräsentierenden Trägheit an, wohingegen das Prüflingsdrehmoment auf die den Prüfling repräsentierende Trägheit wirkt.

Der nächste Verfahrensschritt stellt den Kern der gegenständlichen Erfindung dar. Darin wird anhand eines zweiten, autonomen Differentialgleichungssystems, das eine hohe Modellordnung besitzen kann, ein Modell des Prüflingsdrehmoments angegeben, wobei anhand eines ersten Subsystems der Gleichanteil und anhand m weiterer, oszilierender Subsysteme m Oberwellen des Prüflingsdrehmoments abgebildet werden. Die m oszillierenden Subsysteme zur Modellierung der m Oberwellen sind hierbei bevorzugt in Form gedämpfter und/oder ungedämpfter Oszillatoren ausgeführt. In der Regelungstechnik sind derartige Systeme zur Beschreibung von Eingangsgrößen bereits als sogenannte "Exosysteme" bekannt, sie fanden in der Prüfstandstechnik bislang jedoch keine Anwendung, obwohl deren Verwendung zu einer Reihe überraschend positiver Effekte führen kann.

Erfindungsgemäß werden das erste und das zweite Differentialgleichungssystem in der Folge zu einem Gesamtmodell kombiniert, auf dessen Basis in einem weiteren Verfahrensschritt ein Zustandsbeobachter zur Schätzung der Prüflingsdrehzahl und des Prüflingsdrehmoments entworfen wird. Dabei stellen die gemessene Drehzahl einen Eingang und die zu schätzende Prüflingsdrehzahl und das zu schätzende Prüflingsdrehmoment Ausgänge des Zustandsbeobachters dar. Dem anschließend werden anhand des entworfenen Zustandsbeobachters Schätzwerte für die Prüflingsdrehzahl und das Prüflingsdrehmoment ermittelt, welche in einem abschließenden Verfahrensschritt zur Regelung von zumindest einer am Prüfstand vorherrschenden rotatorischen Größe herangezogen werden.

Ein erster positiver Effekt der Verwendung eines autonomen Exosystems zur Modellierung des Prüflingsdrehmoments ergibt sich im gegenständlichen Fall insbesondere durch den Umstand, dass das im ersten Differentialgleichungssystem als unbekannter Eingang auftretende Prüflingsdrehmoment durch das vorgestellte Exosystem ersetzt werden kann. Das so entstehende Modell kann als neues, die rotatorische Dynamik der Prüfstandsanordnung und die Dynamik des Prüflingsdrehmoments umfassendes Gesamtmodell aufgefasst werden. Aufgrund des autonomen Charakters des Exosystems werden so die im ersten Differentialgleichungssystem bestehenden Abhängigkeiten von unbekannten externen Größen gelöst. Da unbekannte externe Eingangsgrößen in vielen Anwendungen der Beobachtertechnik eine große Erschwernis darstellen können, wird vielfach bereits durch diesen Effekt die Qualität der ermittelten Schätzungen verbessert. Erfolgt die Schätzung der Prüflingsdrehzahl überdies mittels einer Rekonstruktion des Zustandes des der Schätzung zugrunde gelegten Gesamtmodells, wie dies in der aus der Regelungstechnik hinlänglich bekannten Beobachtertechnik übliche Praxis ist, wird das Prüflingsdrehmoment im konkreten Fall ohne Zusatzaufwand mitgeschätzt. Die eingangs erwähnte Beobachtung der im Prüfling umgesetzten Leistung erfolgt so im Wesentlichen von selbst.

Ein zweiter für die Praxis wertvoller Vorteil ergibt sich bei der erfindungsgemäßen Herangehensweise aus der Struktur des zweiten Differentialgleichungssystems bzw. aus der Struktur des Exosystems zur Modellierung des Prüflingsdrehmoments. Zieht man in Betracht, dass die Genauigkeit einer Rekonstruktion eines Signals durch die Hinzunahme von Oberwellen beliebig erhöht werden kann, eröffnet dies unmittelbar einen Ansatz zur Erweiterung des vorgestellten Exosystems bzw. des zweiten Differentialgleichungssystems. Werden dementsprechend zusätzliche oszillierende Subsysteme in Form von Oszillatoren zur Berücksichtigung weiterer Oberwellen hinzugefügt, erhöht sich zwar die Anzahl an Zustandsvariablen im Exosystem und damit im resultierenden Gesamtmodell. Da die sich die jeweiligen oszillierenden Subsysteme jedoch nicht gegenseitig beeinflussen, sondern voneinander entkoppelt sind, werden dadurch weder das Exosystem noch das resultierende Gesamtmodell in einem entscheidenden Maß komplexer gemacht oder schwerer handhabbar. Gerade dieser Aspekt ist bei der Beurteilung der praktischen Anwendbarkeit des erfindungsgemäßen Verfahrens relevant, da man in der Praxis üblicherweise versucht, Modellen mit hoher Ordnung zu vermeiden. Da sich die genannten oszillierenden Subsysteme aber in keiner Weise gegenseitig beeinflussen, steht der einzigen negativen Folge einer Hinzunahme weiterer oszillierender Subsysteme, nämlich der Notwendigkeit, zusätzliche Zustandsvariablen berücksichtigen zu müssen, vor allem der große Vorteil einer erhöhten Modellgenauigkeit gegenüber. Diese Eigenschaft trifft natürlich auch auf Exosysteme zu, die von vornherein eine hohe Modellordnung aufweisen.

Ein weiterer vorteilhafter Aspekt des erfindungsgemäßen Verfahrens kann an der Stabilität des eingesetzten Exosystems und des sich damit ergebenden Gesamtsystems festgemacht werden. Da es sich bei den oszillierenden Subsystemen zur Modellierung der Oberwellen bevorzugt um gedämpfte und/oder ungedämpfte Oszillatoren handelt, deren Eigenwerte entweder auf der imaginären Achse oder in der linken offenen Halbebene der komplexen Ebene liegen, kann durch die Hinzunahme weiterer Oszillatoren der Stabilitätscharakter des resultierenden Gesamtsystems nicht grundlegend verändert werden. Da in Bezug auf die Stabilität der zur Schätzung eingesetzten Modelle auch bei Veränderungen der Modellparameter keine Gefahr hinsichtlich eines möglichen Stabilitätsverlustes besteht, kann das Exosystem zur Modellierung des Prüflingsdrehmoments ohne Bedenken während des Betriebs des Prüfstands an sich ändernde rotatorische Größen des Prüfstands angepasst werden bzw. diesen nachgeführt werden, bevorzugt einer gemessenen Drehzahl wie der von der Belastungsmaschine angenommenen Lastdrehzahl.

Es ist an dieser Stelle anzumerken, dass die Aufgabe der gegenständlichen Erfindung zwar ihren Ursprung im Bereich von Motor- und insbesondere von Elektromotorprüfständen hat, dass das erfindungsgemäße Verfahren aber auch bei einer Vielzahl weiterer Prüfstände, beispielsweise bei Antriebsstrangprüfständen, Rollenprüfständen oder Komponentenprüfständen, angewandt werden kann. Auch die konkrete Regelungsaufgabe, die entsprechend dem erfindungsgemäßen Verfahren unter Zuhilfenahme des geschätzten Prüflingsdrehmoments und der geschätzten Prüflingsdrehzahl gelöst wird, ist breit auszulegen. Neben der bereits erwähnten Dämpfungsregelung sind diesbezüglich vor allem Massen- bzw. Trägheitssimulation und n-alpha Betrieb als weitere Anwendungen zu nennen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 eine schematische Darstellung einer Prüfstandsanordnung

Fig.2 eine schematische Darstellung eines Modells eines Zweimassenschwingers

Fig.3 einen beispielhaften Verlauf eines Prüflingsdrehmoments

Fig.4 ein Blockschaltbild einer beispielhaften Reglerstruktur ohne die erfindungsgemäße Schätzung von Prüflingsdrehzahl und Prüflingsdrehmoment

Fig.5 ein Blockschaltbild einer beispielhaften Reglerstruktur mit erfindungsgemäßer Schätzung von Prüflingsdrehzahl und Prüflingsdrehmoment

Fig.6 eine Prüfstandsanordnung mit zwei Belastungsmaschinen

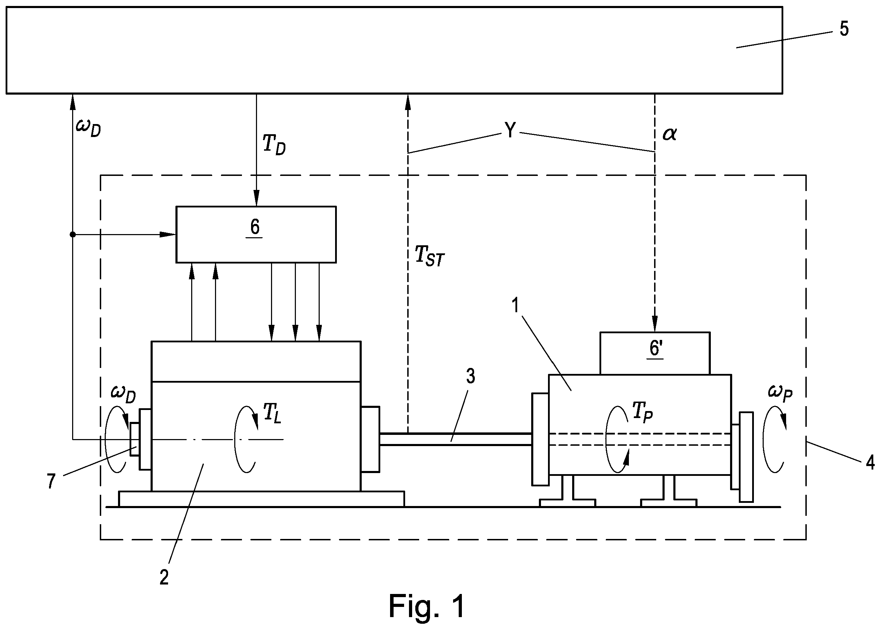

Fig. 1 zeigt in einer schematisierten Darstellung die wesentlichen Komponenten eines Motorprüfstands. Ein rotierender Prüfling 1, bevorzugt in Form eines Elektromotors oder auch Verbrennungsmotors, ist hierbei über eine Verbindungswelle 3 mit einer Belastungsmaschine 2 verbunden, die den Prüfling 1 mit einem Lastmoment beaufschlagt. Die Belastungsmaschine ist in der Regel als elektrische Maschine ausgeführt. Die Einheit aus Prüfling 1, Belastungsmaschine 2 und Verbindungswelle 3 wird im Zusammenhang mit der gegenständlichen Beschreibung auch als Prüfstandsanordnung 4 bezeichnet. Ein Automatisierungssystem 5 ermittelt in der gezeigten Situation Steuergrößen für den Betrieb der Prüfstandsanordnung 4, konkret für die einzelnen aktiven Komponenten, und gibt diese der Prüfstandsanordnung 4 vor, was insbesondere die Vorgabe eines Belastungsmaschinen-Drehmoments $T_D$ der Belastungsmaschine 2 miteinschließt. Neben der Steuergröße für das Belastungsmaschinen-Drehmoment $T_D$ kann das Automatisierungssystem 5 auch eine Steuergröße $\alpha$ für den Prüfling 1 ausgeben. Je nach Prüfling 1 kann die Steuergröße $\alpha$ dabei unterschiedliche Bedeutung besitzen, im Fall eines Verbrennungsmotors kann es für eine Pedalstellung, Drosselklappenstellung oder ähnliches stehen, im Fall eines Elektromotors ist seine Bedeutung oftmals als prozentualer Anteil eines Maximaldrehmoments, das der Prüfling 1 erzeugen kann, gegeben. An dieser Stelle sei angemerkt, dass der Prüfling 1 nicht zwingend an das Automatisierungssystem 5 angebunden sein muss. In derartigen Fällen geschieht die Vorgabe einer Steuergröße $\alpha$ nicht mehr vom Automatisierungssystem 5, sondern muss auf anderem Weg erfolgen, beispielsweise durch eine Vorgabe eines Prüfstandsbedieners oder durch ein am Prüfling 1 vorgesehenes Steuergerät.

Die Steuergrößen werden in der Folge von einer Stelleinrichtung 6 der Belastungsmaschine 2 bzw. einer Stelleinrichtung 6' des Prüflings 1 in entsprechende Stellgrößen umgewandelt, mit denen diese angesteuert werden. Ist die Belastungsmaschine 2 wie vielfach üblich als elektrische Maschine, beispielsweise als Synchron- oder Asynchronmaschine, ausgeführt, wird ein als Steuergröße übermitteltes Belastungsmaschinen-Drehmoment $T_D$ in Form eines Luftspaltmoments $T_L$ realisiert. Als Stellgröße zur Erzeugung dieses Luftspaltmoments $T_L$ können dann in diesem Fall Wicklungsströme oder Wicklungsspannungen der Belastungsmaschine 2 verwendet werden. Das Luftspaltmoment $T_L$ wird dabei in bekannter Weise von der Belastungsmaschine 2 erzeugt und greift am Rotor der Belastungsmaschine 2 an.

Die Ist-Werte der Regelgrößen werden anhand geeigneter Sensoren ermittelt und dem Automatisierungssystem 5 über geeignete Signalleitungen übermittelt, wie der in Fig. 1 dargestellte Ist-Wert der Winkelgeschwindigkeit der Belastungsmaschine 2, welche in der Folge auch als "Lastwinkelgeschwindigkeit" $\omega_D$ bezeichnet wird. Die Lastwinkelgeschwindigkeit $\omega_D$ kann beispielsweise mittels eines Drehgebers 7 erfasst werden. Die Prüflingswinkelgeschwindigkeit $\omega_P$ steht im erfindungsgemäßen Verfahren nicht als Messgröße zur Verfügung, und auch das von der Verbindungswelle 3 übertragene Wellenmoment $T_{ST}$ ist vielfach nicht in Form einer Messgröße verfügbar, was durch die strichlierten Signalleitungen Y in Fig. 1 angedeutet ist. Winkelgeschwindigkeiten $\omega$ und Drehzahlen $n$ der Prüfstandsanordnung 4, beispielsweise Prüflingswinkelgeschwindigkeit $\omega_P$ und Prüflingsdrehzahl $n_P$, hängen dabei über den bekannten Ausdruck

$$\omega = \pi \frac{n}{30}$$ zusammen und sind hinsichtlich ihrer Wirkung auf das erfindungsgemäße Verfahren synonym zu betrachten.

Um den folgenden Text und die mathematische Beschreibung der erwähnten Modelle konsistent zu gestalten, wird in weiterer Folge überwiegend und ohne Einschränkung der Allgemeinheit von Winkelgeschwindigkeiten Gebrauch gemacht.

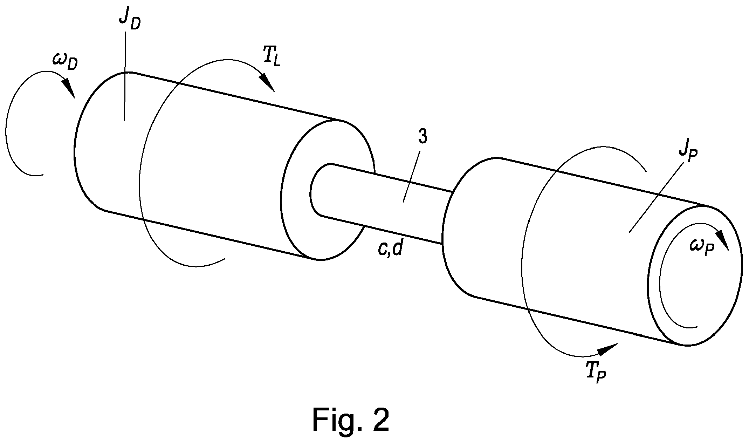

Der erste Schritt des erfindungsgemäßen Verfahrens sieht die Angabe eines ersten Differentialgleichungssystems zur Modellierung des rotatorischen Verhaltens, in der Folge auch als Schwingungsverhalten bezeichnet, der Prüfstandsanordnung 4 vor. Zu diesem Zweck wird bevorzugt ein rotatorisches Mehrkörpersystem angesetzt, dessen einfachste Ausführung durch einen Zweimassenschwinger gegeben ist. In Fig. 2 ist ein derartiger Zweimassenschwinger gezeigt. Neben den für das Schwingungsverhalten maßgebenden Prüfstandsgrößen Wellenmoment $T_{ST}$, von der Belastungsmaschine 2 erzeugtes Luftspaltmoment $T_L$, Prüflingsdrehmoment $T_P$, Belastungsmaschinenwinkelgeschwindigkeit $\omega_D$ und Prüflingswinkelgeschwindigkeit $\omega_P$ beinhaltet Fig. 2 die Wellensteifigkeit c und die Wellendämpfung d zur Beschreibung der mechanischen Verbindungswelle 3 zwischen Prüfling 1 und Belastungsmaschine 2, sowie das Prüflings-Trägheitsmoment $J_P$ und das Belastungsmaschinen-Trägheitsmoment $J_D$. Diese Parameter können als bekannt vorausgesetzt werden. Auf Basis des in Fig. 2 gezeigten Zweimassenschwingers kann ein hinlänglich bekanntes erstes Differentialgleichungssystem zur Beschreibung des rotatorischen Verhaltens der Prüfstandsanordnung 4 in Form von

$$\frac{d}{dt}\underbrace{\begin{bmatrix}\Delta\varphi\\\omega_D\\\omega_P\end{bmatrix}}_{x} = \underbrace{\begin{pmatrix}0 & 1 & -1\\-\dfrac{c}{J_D} & -\dfrac{d}{J_D} & \dfrac{d}{J_D}\\\dfrac{c}{J_P} & \dfrac{d}{J_P} & -\dfrac{d}{J_P}\end{pmatrix}}_{A}\begin{bmatrix}\Delta\varphi\\\omega_D\\\omega_P\end{bmatrix} + \underbrace{\begin{pmatrix}0\\-\dfrac{1}{J_D}\\0\end{pmatrix}}_{b_L}T_L + \underbrace{\begin{pmatrix}0\\0\\\dfrac{1}{J_P}\end{pmatrix}}_{b_P}T_P$$

mit der Ausgangsgleichung

$$\omega_D = \underbrace{\begin{pmatrix}0 & 1 & 0\end{pmatrix}}_{c_A}\begin{bmatrix}\Delta\varphi\\\omega_D\\\omega_P\end{bmatrix}$$

angegeben werden, wobei $\Delta\varphi$ für den Differenzdrehwinkel zwischen Prüfling 1 und Belastungsmaschine 2 steht. Die Variablen $x, A, b_L, b_P$ und $c_A$ stehen hier in entsprechender Reihenfolge für den Zustandsvektor, die Dynamikmatrix, den ersten und zweiten Eingangsvektor sowie für den Ausgangsvektor des ersten

Differentialgleichungssystems und ergeben sich aus der Modellierung. Die Ausgangsgleichung beschreibt im gegenständlichen Fall die Winkelgeschwindigkeit $\omega_D$ der Belastungsmaschine 2, was vielfach üblich ist, da die zugehörige Lastdrehzahl typischerweise als Messgröße zur Verfügung steht. Durch eine alternative Wahl des Ausgangsvektors sind verschiedene weitere Ausgestaltungen der Ausgangsgleichung und damit der Ausgangsgröße denkbar.

Wie jedes Modell eines realen physikalischen Systems stellt auch das gegenständliche erste Differentialgleichungssystem eine vereinfachte, modellhafte Abstraktion des realen Verhaltens der modellierten Prüfstandsanordnung 4 dar. So kann bei der Formulierung des Modells die Massenträgheit der elastischen Verbindungswelle zu gleichen Teilen zur Trägheit $J_D$ und zur Trägheit $J_P$ addiert werden. Daneben wird angenommen, dass es sich bei sämtlichen Systembestandteilen um lineare Elemente handelt. Mögliche nichtlineare Merkmale der Prüfstandsanordnung 4, wie Wellenspiel, eine nichtlineare Steifigkeit oder Haftreibung, werden dementsprechend nicht berücksichtigt. Auch die von der Belastungsmaschine 2 eingebrachte Aktuatordynamik, die sich üblicherweise durch eine Kombination aus Totzeit und PT1-Verhalten bei der Umsetzung der Steuergröße $T_D$ in ein Luftspaltmoment $T_L$ äußert, wird vernachlässigt. Bei Vernachlässigung der Aktuatordynamik entspricht insbesondere das Luftspaltmoment $T_L$ der Steuergröße $T_D$. Durch eine Berücksichtigung der gegenständlich vernachlässigten Merkmale könnten unmittelbar noch weitere, komplexere Modelle der Prüfstandsanordnung 4 in Form von Differentialgleichungssystemen angegeben werden. Zur Beschreibung des erfindungsgemäßen Verfahrens ist das gezeigte erste Differentialgleichungssystem jedoch ausreichend. Die Modellparameter werden für die weiteren Betrachtungen als bekannt vorausgesetzt. Anhand des angegebenen Modells kann die Formulierung der allgemeinen Aufgabe der gegenständlichen Erfindung für das gezeigte Ausführungsbeispiel und zum besseren Verständnis konkretisiert werden, nämlich als die Bestimmung eines Verfahrens zur Schätzung der Größen $\omega_P$ und $T_P$.

Zur Lösung dieser Aufgabe wird wie erwähnt ein zweites Differentialgleichungssystem zur Beschreibung des Prüflingsdrehmoments $T_P$ angegeben. Das erzeugte Prüflingsdrehmoment $T_P$ wird mit einem zweiten Differentialgleichungssystem modelliert, wobei anhand eines ersten Subsystems des zweiten Differentialgleichungssystems der Gleichanteil des Prüflingsdrehmoments $T_P$ abgebildet wird und anhand einer Anzahl m weiterer, oszillierender Subsysteme des zweiten Differentialgleichungssystems in Form gedämpfter und/oder ungedämpfter Oszillatoren m Oberwellen des Prüflingsdrehmoments $T_P$ abgebildet werden.

Im konkreten Ausführungsbeispiel werden drei (m = 3) Oberwellen berücksichtigt, wodurch das zweite Differentialgleichungssystem die Form

$$\frac{d}{dt}\underbrace{\begin{bmatrix} z_0 \\ z_{1,1} \\ z_{1,2} \\ z_{2,1} \\ z_{2,2} \\ z_{3,1} \\ z_{3,2} \end{bmatrix}}_{z} = \underbrace{\begin{pmatrix} 0 & 0 & 0 & 0 & 0 & 0 & 0 \\ 0 & 0 & -\zeta_1 & 0 & 0 & 0 & 0 \\ 0 & \zeta_1 & 0 & 0 & 0 & 0 & 0 \\ 0 & 0 & 0 & 0 & -\zeta_2 & 0 & 0 \\ 0 & 0 & 0 & \zeta_2 & 0 & 0 & 0 \\ 0 & 0 & 0 & 0 & 0 & 0 & -\zeta_3 \\ 0 & 0 & 0 & 0 & 0 & \zeta_3 & 0 \end{pmatrix}}_{S} \begin{bmatrix} z_0 \\ z_{1,1} \\ z_{1,2} \\ z_{2,1} \\ z_{2,2} \\ z_{3,1} \\ z_{3,2} \end{bmatrix}$$

mit der Ausgangsgleichung

$$T_P = \underbrace{\begin{pmatrix} 1 & 1 & 0 & 1 & 0 & 1 & 0 \end{pmatrix}}_{c_S} \begin{bmatrix} z_0 \\ z_{1,1} \\ z_{1,2} \\ z_{2,1} \\ z_{2,2} \\ z_{3,1} \\ z_{3,2} \end{bmatrix}$$

annimmt. Auch hier sind analog zum ersten Differentialgleichungssystem Variablen z, S und $c_S$ angegeben, welche in entsprechender Reihenfolge den Zustandsvektor mit einer Anzahl von 2m + 1 Zustandsvariablen z, die Dynamikmatrix und den Ausgangsvektor des zweiten Differentialgleichungssystems bezeichnen. Anhand der Zustandsvariable $z_0$, die der Differentialgleichung

$$\frac{d}{dt} z_0 = 0$$

gehorcht, wird dabei der Gleichanteil des Prüflingsdrehmoments $T_P$ beschrieben.

Die restlichen Zustandsvariablen $z_{k,1}$, $z_{k,2}$ sind stets in Zweierpaaren zu betrachten, die je dem $k$-ten oszillierenden Subsystem zuzurechnen sind. Die Laufvariable $k$ dient hierbei der Indizierung der oszillierenden Subsysteme und der zugehörigen Variablen. Konkret sind als oszillierende Subsysteme jene Teile des Differentialgleichungssystems zu verstehen, die jeweils von sich wechselseitig beeinflussenden Zustandsvariablen des Zustandsvektors gebildet werden. Dementsprechend gilt beispielsweise für jedes dieser oszillierenden Subsysteme für die Zustandsvariablen $z_{k,1}$ und $z_{k,2}$ die vektorwertige Differentialgleichung

$$\frac{d}{dt}\begin{bmatrix} z_{k,1} \\ z_{k,2} \end{bmatrix} = \begin{pmatrix} 0 & -\zeta_k \\ \zeta_k & 0 \end{pmatrix} \begin{bmatrix} z_{k,1} \\ z_{k,2} \end{bmatrix},$$

was bekanntermaßen einem harmonischen Oszillator mit der Kreisfrequenz $\zeta_k$ entspricht. Die Eigenwerte dieses Subsystems liegen bei $\pm j\zeta_k$ auf der imaginären Achse der komplexen Ebene, und können diese auch bei Variationen der Kreisfrequenz $\zeta_k$ nicht verlassen. Eine Erweiterungsmöglichkeit dieses Oszillators ist durch die Berücksichtigung von Dämpfung mittels eines geeigneten Dämpfungsfaktors $\eta_k$ gegeben. Eine derartige Modifikation würde zu einem gedämpften Oszillator mit der Differentialgleichung

$$\frac{d}{dt}\begin{bmatrix} z_{k,1} \\ z_{k,2} \end{bmatrix} = \begin{pmatrix} -\eta_k & -\zeta_k \\ \zeta_k & -\eta_k \end{pmatrix}\begin{bmatrix} z_{k,1} \\ z_{k,2} \end{bmatrix},$$

führen, dessen Eigenwerte im Fall eines positiven und reellen Dämpfungsfaktors $\eta_k > 0$ generell in der linken Hälfte der komplexen Ebene liegen. Die Eigenschaft, dass die Eigenwerte eines derartigen Oszillators nie in der rechten Hälfte der komplexen Ebene zu liegen kommen können, ist insbesondere in Fällen von Vorteil, in denen das zweite Differentialgleichungssystem zur Modellierung der Prüflingsdrehmoments $T_P$ an eine sich während des Betriebs des Prüfstands ändernde Größe der Prüfstandsanordnung 4 angepasst wird, zum Beispiel an die Winkelgeschwindigkeit $\omega_D$.

Ausgehend von einem von Null verschiedenen Anfangszustand führen die beiden Variablen $z_{k,1}$ und $z_{k,2}$ je einen um 90 Grad zueinander phasenverschobenen, sinusförmigen Verlauf aus. Greift man eine dieser beiden Zustandsvariablen heraus, kann damit in der Folge eine einzelne Oberwelle eines Prüflingsdrehmomentes $T_P$ und durch eine Summe über mehrere derart bestimmte Oberwellen ein gesamtes oberwellenbehaftetes Prüflingsdrehmoment $T_P$ beschrieben werden.

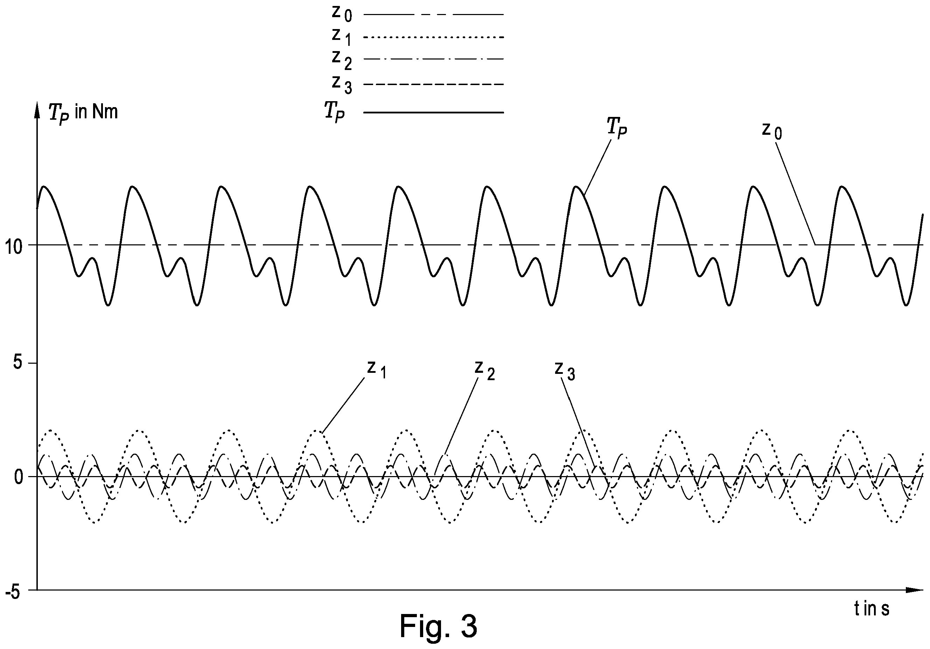

Am Aufbau des Ausgangsvektors $c_S$ lässt sich erkennen, dass zur Bildung der Ausgangsgröße $T_P$ die Zustandsvariable $z_0$ und von jedem der oszillierenden Subsysteme genau eine zugehörige Zustandsvariable aufsummiert werden. Fig. 3 zeigt in diesem Zusammenhang einen möglichen Verlauf eines auf diese Art gebildeten Prüflingsdrehmoments $T_P$.

Um die Kreisfrequenzen $\zeta_k$ zu parametrieren, kann beispielsweise auf ganzzahlige Vielfache der Lastwinkelgeschwindigkeit $\omega_D$ zurückgegriffen werden, was auf den Zusammenhang

$$\zeta_k = k\omega_D$$

führt. Die Kreisfrequenzen $\zeta_k$ werden so zu Funktionen der Lastwinkelgeschwindigkeit $\omega_D$, was dazu verwendet werden kann, die Kreisfrequenzen $\zeta_k$ während des Betriebs an eine sich gegebenenfalls ändernde Lastwinkelgeschwindigkeit $\omega_D$ anzupassen. Anstelle der Lastwinkelgeschwindigkeit $\omega_D$ können jedoch auch andere rotatorische Größen der Prüfstandsanordnung 4 zur Parametrierung der Kreisfrequenzen $\zeta_k$ eingesetzt werden. Überdies ist auch möglich, die Kreisfrequenzen $\zeta_k$ einmal zu Beginn des Betriebs auf die beschriebene Art und Weise zu wählen, im Anschluss jedoch nicht mehr zu verändern und sie dementsprechend konstant zu halten. Bei Elektromotorprüfständen ist es vielfach von Vorteil, bei der Wahl der Frequenzen $\zeta_k$ die ganzzahlige Polpaarzahl $p$ zu berücksichtigen, was zu

$$\zeta_k = kp\omega_D$$

führt und zu einer Reduktion der resultierenden Modellordnung beitragen kann.

Es sei an dieser Stelle angemerkt, dass die Wahl der Frequenzen $\zeta_k$ auch auf eine gänzlich andere Art erfolgen kann, beispielsweise durch die Verwendung krummer Verhältnisse zwischen den Frequenzen $\zeta_k$ und der Lastwinkelgeschwindigkeit $\omega_D$. Die Frequenzen $\zeta_k$ können aber vom Fachmann auch einfach anwendungsspezifisch gewählt werden.

Eine eingangs erwähnte Erweiterung des zweiten Differentialgleichungssystems zur Erhöhung der Modellgenauigkeit kann leicht durch eine Hinzunahme weiterer Oszillatoren erfolgen, wodurch die Anzahl m erhöht werden würde. Auch sei angemerkt, dass nicht unbedingt aufeinanderfolgende Oberwellen verwendet werden müssen. Beispielsweise können nur ungerade Oberwellen oder nur gerade Oberwellen oder eine beliebige Auswahl von Oberwellen verwendet werden.

Zur tatsächlichen Ermittlung der Schätzwerte für $\omega_P$ und $T_P$ werden das erste und das zweite Differentialgleichungssystem zu einem Gesamtsystem zusammengeführt. Zur näheren Beschreibung dieses Schrittes wird zunächst anhand der zuvor eingeführten Abkürzungen für die Systemparameter das erste Differentialgleichungssystem in der kompakten Form

$$\frac{d}{dt}x = Ax + b_L T_L + b_P T_P$$

$$\omega_D = c_A Z$$

und das zweite Differentialgleichungssystem in der kompakten Form

$$\frac{d}{dt}\mathbf{z} = \mathbf{S}\mathbf{z}$$

$$T_P = \mathbf{c}_S \mathbf{z}$$

**angeschrieben.** Ersetzt man den Eingang $T_P$ des ersten Differentialgleichungssystems durch den Ausgang $T_P$ des zweiten Differentialgleichungssystems, ergibt sich das Gesamtsystem

$$\frac{d}{dt}\begin{bmatrix}\mathbf{x}\\\mathbf{z}\end{bmatrix} = \begin{pmatrix}\mathbf{A} & \mathbf{b}_P\mathbf{c}_S\\\mathbf{0}_x & \mathbf{S}\end{pmatrix}\begin{bmatrix}\mathbf{x}\\\mathbf{z}\end{bmatrix} + \begin{pmatrix}\mathbf{b}_L\\\mathbf{0}_z\end{pmatrix}T_L$$

$$\omega_D = \begin{pmatrix}\mathbf{c}_A & \mathbf{0}_z\end{pmatrix}\begin{bmatrix}\mathbf{x}\\\mathbf{z}\end{bmatrix},$$

worin $\mathbf{0}_x$ und $\mathbf{0}_z$ für Nullmatrizen geeigneter Dimension stehen. Für ein derartiges lineares System existieren vielfältige Ansätze, um einen Zustandsbeobachter zur Schätzung des Zustandsvektors $\begin{bmatrix}\mathbf{x}\\\mathbf{z}\end{bmatrix}$ zu entwerfen.

In einer bevorzugten Weise kann jedoch auf den hinlänglich bekannten Luenberger-Beobachter zurückgegriffen werden, was aber keinesfalls einschränkend zu werten ist. Bekanntermaßen umfasst ein Luenberger-Beobachter eine Kopie des Differentialgleichungssystems, das die Dynamik der zu schätzenden Variablen beschreibt, und einen Korrekturterm, was im konkreten Fall zur Beobachter-Differentialgleichung

$$\frac{d}{dt}\begin{bmatrix}\widehat{\mathbf{x}}\\\widehat{\mathbf{z}}\end{bmatrix} = \begin{pmatrix}\mathbf{A} & \mathbf{b}_P\mathbf{c}_S\\\mathbf{0}_x & \mathbf{S}\end{pmatrix}\begin{bmatrix}\widehat{\mathbf{x}}\\\widehat{\mathbf{z}}\end{bmatrix} + \begin{pmatrix}\mathbf{b}_L\\\mathbf{0}_z\end{pmatrix}T_L + \mathbf{K}\left(\omega_D - \begin{pmatrix}\mathbf{c}_A & \mathbf{0}_z\end{pmatrix}\begin{bmatrix}\widehat{\mathbf{x}}\\\widehat{\mathbf{z}}\end{bmatrix}\right)$$

führt. Darin stehen $\widehat{x}$ und $\widehat{z}$ für die zu ermittelnden Schätzwerte der Zustandsvektoren x und $\mathbf{z}$. Die vektorwertige Korrekturverstärkung $\mathbf{K}$ wird dabei üblicherweise so gewählt, dass die Dynamikmatrix $\widehat{\mathbf{A}}$ der Differentialgleichung des Schätzfehlers $\mathbf{e} = \begin{bmatrix}\mathbf{x}\\\mathbf{z}\end{bmatrix} - \begin{bmatrix}\widehat{\mathbf{x}}\\\widehat{\mathbf{z}}\end{bmatrix}$ vorgegebene Eigenwerte annimmt, was eine in der Regelungstechnik hinlänglich bekannte Vorgehensweise darstellt. Die Dynamikmatrix der Differentialgleichung des Schätzfehlers e ergibt sich aus obiger Gleichung unmittelbar als

$$\widehat{\mathbf{A}} = \left(\begin{pmatrix}\mathbf{A} & \mathbf{b}_P\mathbf{c}_S\\\mathbf{0}_x & \mathbf{S}\end{pmatrix} - \mathbf{K}\begin{pmatrix}\mathbf{c}_A & \mathbf{0}_z\end{pmatrix}\right),$$

worin die Wirkung der Korrekturverstärkung $\mathbf{K}$ auf die Parameter der Matrix und damit deren Eigenwerte klar ersichtlich ist. Neben der direkten Vorgabe von Eigenwerten sind hierbei auch weitere Ansätze zur Wahl von $\mathbf{K}$ denkbar, vielfach wird zu diesem Zweck der ebenfalls hinlänglich bekannte LQR-Ansatz herangezogen.
Wird die angeführte Beobachter-Differentialgleichung in einem weiteren Schritt um die vektorwertige Ausgangsgleichung

$$\begin{bmatrix}\widehat{\omega}_P\\\widehat{T}_P\end{bmatrix} = \begin{pmatrix}\begin{pmatrix}0 & 0 & 1\end{pmatrix} & \mathbf{0}_z\\\mathbf{0}_x & \mathbf{c}_S\end{pmatrix}\begin{bmatrix}\widehat{\mathbf{x}}\\\widehat{\mathbf{z}}\end{bmatrix}$$

erweitert, ergeben sich die gewünschten Schätzwerte von Prüflingswinkelgeschwindigkeit $\widehat{\omega}_P$ und Prüflingsdrehmoment $\widehat{T}_P$ als Ausgänge des damit komplettierten Zustandsbeobachters.
Ein in diesem Zusammenhang hervorzuhebender Vorteil des erfindungsgemäßen Verfahrens ist, dass die vorgestellte Ausgangsgleichung des Zustandsbeobachters leicht erweiterbar ist, beispielsweise um zusätzlich einen Schätzwert $\widehat{T}_{ST}$ für das Wellenmoment $\widehat{T}_{ST}$ zu ermitteln. In einer bevorzugten Ausführung der gegenständlichen Erfindung wird die Ausgangsgleichung des Zustandsbeobachters zu diesem Zweck um eine Zeile ergänzt, in der zur Ermittlung des Schätzwertes $\widehat{T}_{ST}$ die bekannten Parameter der Wellensteifigkeit c und der Wellendämpfung d herangezogen werden, was zur Ausgangsgleichung

$$\begin{bmatrix} \hat{\omega}_P \\ \hat{T}_P \\ \hat{T}_{ST} \end{bmatrix} = \begin{pmatrix} (0 & 0 & 1) & \mathbf{0}_z \\ & \mathbf{0}_x & \mathbf{c}_S \\ (-c & -d & d) & \mathbf{0}_z \end{pmatrix} \begin{bmatrix} \hat{x} \\ \hat{z} \end{bmatrix}$$

führt. Auf analoge Weise können noch weitere Ausgangsgrößen gebildet werden, beispielsweise für einen Schätzwert der Lastwinkelgeschwindigkeit $\hat{\omega}_D$. Auch die Kombination mehrerer bereits vorhandener Ausgangsgrößen zu neuen Ausgangsgrößen kann in diesem Zusammenhang vorteilhaft sein. Aus der Beobachter-Differentialgleichung des beschriebenen Ausführungsbeispiels ist dabei ersichtlich, dass das Luftspaltmoment $T_L$ und die Lastwinkelgeschwindigkeit $\omega_D$ in dieses System als Eingangsgrößen eingehen, was üblicherweise kein Hindernis darstellt, da beide Größen nur in äußerst unüblichen Fällen unbekannte Größen darstellen. Es sei an dieser Stelle jedoch angemerkt, dass sowohl das Luftspaltmoment $T_L$ als auch die Lastwinkelgeschwindigkeit $\omega_D$ bei der Umsetzung des erfindungsgemäßen Verfahrens durch andere in der Prüfstandsanordnung 4 vorherrschende Winkelgeschwindigkeiten oder Drehmomente ersetzt werden können, beispielsweise durch das Wellenmoment $T_{ST}$ und eine Winkelgeschwindigkeit der Wellenverbindung 3. In derartigen Fällen muss lediglich das erste Differentialgleichungssystem entsprechend angepasst werden, an der grundlegenden Vorgehensweise ändert sich allerdings nichts. Durch eine Anpassung des ersten Differentialgleichungssystems kann auch die Umsetzung einer Steuergröße $T_D$ in ein Luftspaltmoment $T_L$ berücksichtigt werden. Typischerweise wird dazu der Zusammenhang zwischen Steuergröße $T_D$ und Luftspaltmoment $T_L$ durch eine Kombination aus Totzeit und PT1-Verhalten modelliert, wobei Totzeit hierbei vorteilhaft anhand einer Padé-Approximation beschrieben werden kann.

Werden, wie zuvor beschrieben, die Kreisfrequenzen $\zeta_k$ als Funktionen der Lastwinkelgeschwindigkeit $\omega_D$ oder als Funktionen einer anderen in der Prüfstandsanordnung 4 vorherrschenden rotatorischen Größe gewählt, und wird die Korrekturverstärkung K wie vielfach üblich als Funktion der übrigen Parameter der Dynamikmatrix $\hat{A}$ angesetzt, ergibt sich unmittelbar auch eine Abhängigkeit des resultierenden Zustandsbeobachters von der Lastwinkelgeschwindigkeit $\omega_D$ oder von anderen rotatorischen Prüfstandgrößen, von denen die Kreisfrequenzen $\zeta_k$ abhängen. In derartigen Fällen wird der Zustandsbeobachter automatisch an eine sich gegebenenfalls ändernde Lastwinkelgeschwindigkeit $\omega_D$ oder an eine sich gegebenenfalls ändernde, andere rotatorische Größe der Prüfstandsanordnung 4 angepasst, was das Betriebsverhalten der Prüfstandsanordnung 4 teils in einem entscheidenden Maß verbessern kann.

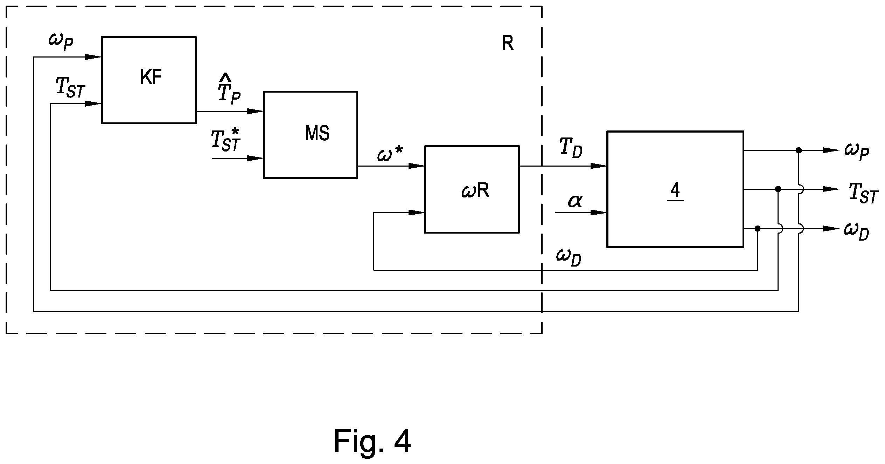

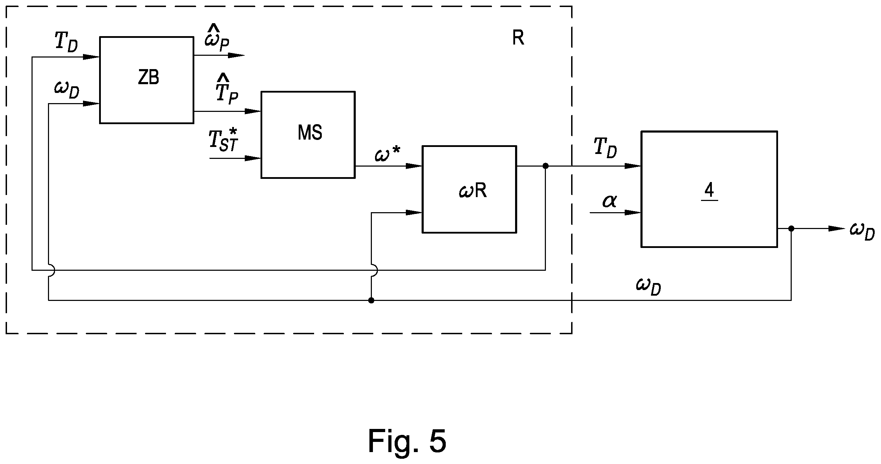

Wie die Schätzwerte $\omega_P$ und $\hat{T}_P$ zur Regelung der Prüfstandsanordnung 4 herangezogen werden können, wird nachfolgend anhand der Figuren 4 und 5 gezeigt. Dabei zeigt Fig. 4 ein Blockschaltbild eines Regelkreises, der in dieser Form insbesondere bei Elektromotorprüfständen zur sogenannten hochdynamischen Wellenmomentregelung eingesetzt wird. Dieser Regelkreis ist beispielsweise im Automatisierungssystem 5 implementiert, vorzugsweise als Software auf mikroprozessorbasierter Hardware des Automatisierungssystems 5. Aber auch andere Implementierungen sind vorstellbar, beispielsweise in Form einer integrierten Schaltung (z.B. FPGA, ASIC usw.).

Das Ziel einer derartigen hochdynamischen Wellenmomentregelung ist üblicherweise, das von der Wellenverbindung 3 übertragene Wellenmoment $T_{ST}$ vorgegebenen zeitlichen Verläufen eines Soll-Wellenmoments $T_{ST}^*$ nachzuführen, wobei derartige Soll-Wellenmomente über hochdynamische Anteile verfügen können und sich innerhalb weniger Millisekunden grundlegend ändern können. Zu regelnde Drehmomente und zu regelnde Winkelgeschwindigkeiten werden in diesem Zusammenhang vielfach auch als "Regelungsdrehmoment" und "Regelungswinkelgeschwindigkeit" bezeichnet. Zur Lösung der genannten Regelungsaufgabe werden üblicherweise ausgehend vom Prüflingsdrehmoment $T_P$ und dem aktuellen Soll-Wellenmoment $T_{ST}^*$ eine Soll-Winkelgeschwindigkeit $\omega^*$ ermittelt, was in der in Fig. 4 gezeigten Realisierung im Block Massensimulation MS erfolgt. Diese Soll-Winkelgeschwindigkeit $\omega^*$ wird im Anschluss durch den Regler $\omega$R eingeregelt und ist üblicherweise so gewählt, dass das dabei auftretende Wellenmoment $T_{ST}$ den vorgegebenen Sollwert $T_{ST}^*$ annimmt (mit einer bestimmten vorgegebenen Regelabweichung). Da das Prüflingsdrehmoment $T_P$ aus genannten Gründen üblicherweise nicht bekannt ist, wird zu dessen Ermittlung vielfach ein Kalman-Filter KF eingesetzt, in den unter anderem das gemessene Wellenmoment $T_{ST}$ als Eingang wirkt. Die in Fig. 4 gezeigte, herkömmliche Realisierung dieser hochdynamischen Wellenmomentregelung setzt somit voraus, dass am Prüfstand die Lastwinkelgeschwindigkeit $\omega_D$, die Prüflingswinkelgeschwindigkeit $\omega_P$ sowie das Wellenmoment $T_{ST}$ messtechnisch erfasst werden und der Prüfstandregelung zur Verfügung stehen.

Aus genannten Gründen wird jedoch gerade bei Elektromotorprüfständen vielfach weder die Prüflingswinkelgeschwindigkeit $\omega_P$ noch das Wellenmoment $T_{ST}$ gemessen, weshalb dieses Vorgehen oftmals nicht möglich ist. Überdies muss oft aus Sicherheitserwägungen die im Prüfling 1 umgesetzte Leistung überwacht werden, wozu überdies auch das vom Prüfling 1 erzeugte Prüflingsdrehmoment $T_P$ bekannt sein sollte. Darüber hinaus liefern an Elektromotoren vorgesehene Drehgeber in den Fällen, in denen diese vorhanden sind, das gewünschte Messsignal vielfach mit nur sehr geringen Abtastraten, wie beispielsweise mit 100Hz. Da moderne Prüfstandsregler R üblicherweise mit Abtastraten von zumindest 5kHz ausgeführt werden, kann alleine dieser Umstand den eingesetzten Prüfstandsregler R stark in seiner Dynamik beeinträchtigen.

Damit das Konzept der Wellenmomentregelung auch ohne Messung der Prüflingswinkelgeschwindigkeit $\omega_P$ verwendet werden kann, wird das bestehende Regelungskonzept um den erfindungsgemäßen Zustandsbeobachter erweitert. Damit kann das in Fig. 5 gezeigte Blockschaltbild realisiert werden, womit der Einsatz der hochdynamischen Wellenmomentregelung auch in Fällen möglich wird, in denen weder Prüflingswinkelgeschwindigkeit $\omega_P$ noch Wellenmoment $T_{ST}$ als Messgrößen zur Verfügung stehen. Ein weiterer Vorteil des erfindungsgemäßen Verfahrens ergibt sich dabei oftmals aus dem Umstand, dass auf den zuvor beschriebene Kalman-Filter KF zur ursprünglichen Schätzung des Prüflingsdrehmoments $T_P$ verzichtet werden kann.

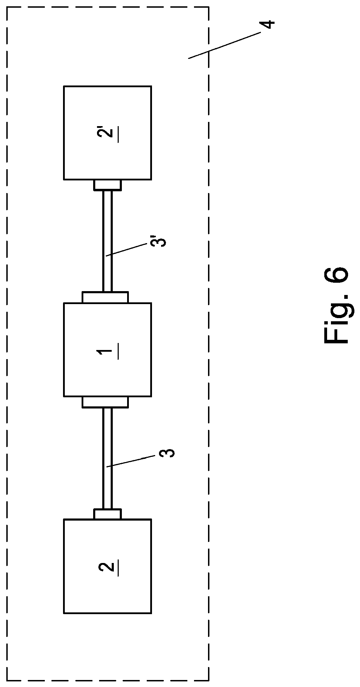

Neben dem anhand der Figuren 4 und 5 erläuterten Anwendungsbeispiel kann das erfindungsgemäße Verfahren zur Lösung einer Vielzahl weiterer prüftechnischer Regelungsprobleme herangezogen werden, wie der Massensimulation, der Dämpfungsregelung usw. Neben diesen regelungstechnischen Problemstellungen sind als weitere Einsatzgebiete insbesondere weitere Prüfstandstopologien zu nennen, wobei vor allem Mehrachsprüfstände hervorzuheben sind. Ein derartiger Aufbau ist in Fig. 6 gezeigt. Darin ist der rotierende Prüfling 1, welcher nun beispielsweise ein Getriebe darstellen kann, über zumindest eine weitere mechanische Wellenverbindung 3' mit zumindest einer weiteren rotierenden Belastungsmaschine 2' verbunden. Die zumindest eine weitere rotierende Belastungsmaschine 2' kann hierbei zusätzlich zur bereits bestehenden rotierenden Belastungsmaschine 2 als Aktuator bei der Regelung der Prüfstandsanordnung 4 herangezogen werden, wobei ohne Einschränkung auf die erfindungsgemäßen Schätzwerte von Prüflingswinkelgeschwindigkeit $\omega_P$ und Prüflingsdrehmoments $T_P$ zurückgegriffen werden kann.

## Patentansprüche

1. Verfahren zur Regelung einer Prüfstandsanordnung (4), bei welcher ein rotierender Prüfling (1) über eine mechanische Wellenverbindung (3) mit einer rotierenden Belastungsmaschine (2) verbunden wird und bei der zumindest eine in der Prüfstandsanordnung (4) vorherrschende Winkelgeschwindigkeit gemessen wird, wobei das rotatorische Verhalten der Prüfstandsanordnung (4) und damit das dynamische Verhalten zumindest der gemessenen Winkelgeschwindigkeit und einer im Prüfling (1) vorherrschenden Prüflingswinkelgeschwindigkeit $(\omega_P)$ mit einem ersten Differentialgleichungssystem modelliert wird, **dadurch gekennzeichnet, dass**

   - das vom Prüfling (1) erzeugte Prüflingsdrehmoment $(T_P)$ mit einem zweiten Differentialgleichungssystem modelliert wird, wobei anhand eines ersten Subsystems des zweiten Differentialgleichungssystems der Gleichanteil des Prüflingsdrehmoments $(T_P)$ abgebildet wird und anhand einer Anzahl m weiterer, oszillierender Subsysteme des zweiten Differentialgleichungssystems in Form gedämpfter und/oder ungedämpfter Oszillatoren m Oberwellen des Prüflingsdrehmoments $(T_P)$ abgebildet werden,
   - auf Basis des ersten und des zweiten Differentialgleichungssystems ein Zustandsbeobachter zur Schätzung der Prüflingswinkelgeschwindigkeit $(\omega_P)$ und des Prüflingsdrehmoments $(T_P)$ entworfen wird, wobei die gemessene Winkelgeschwindigkeit einen Eingang des Zustandsbeobachters darstellt,
   - anhand des Zustandsbeobachters Schätzwerte der Prüflingswinkelgeschwindigkeit $(\hat{\omega}_P)$ und des Prüflingsdrehmoments $(\hat{T}_P)$ ermittelt werden und
   - die ermittelten Schätzwerte von Prüflingswinkelgeschwindigkeit $(\hat{\omega}_P)$ und Prüflingsdrehmoment $(\hat{T}_P)$ zur Regelung zumindest einer in der Prüfstandsanordnung (4) vorherrschenden Regelungswinkelgeschwindigkeit und/oder zumindest eines in der Prüfstandsanordnung (4) vorherrschenden Regelungsdrehmoments herangezogen werden.

2. Verfahren nach Anspruch 1, **dadurch gekennzeichnet, dass** anhand des Zustandsbeobachters neben den Schätzwerten der Prüflingswinkelgeschwindigkeit $(\hat{\omega}_P)$ und des Prüflingsdrehmoments $(\hat{T}_P)$ ein Schätzwert eines Wellenmoments $(\hat{T}_{ST})$ und/oder ein Schätzwert einer Lastwinkelgeschwindigkeit $(\hat{\omega}_D)$ ermittelt werden, welche ebenfalls zur Regelung zumindest einer in der Prüfstandsanordnung (4) vorherrschenden Regelungswinkelgeschwindigkeit und/oder zumindest eines in der Prüfstandsanordnung (4) vorherrschenden Regelungsdrehmoments herangezogen werden.

3. Verfahren nach Anspruch 1 oder 2, **dadurch gekennzeichnet, dass** die Parameter des zweiten Differentialgleichungssystems zur Modellierung des Prüflingsdrehmoments $(T_P)$ als Funktionen von zumindest einer sich während des Betriebs der Prüfstandsanordnung (4) ändernden, in der Prüfstandsanordnung (4) vorherrschenden rotatorischen Größe gewählt werden, um die Parameter des zweiten Differentialgleichungssystems und damit das zweite Differentialgleichungssystem an Änderungen der zumindest einen in der Prüfstandsanordnung (4) vorherrschenden rotatorischen Größe anzupassen.

4. Verfahren nach Anspruch 3, **dadurch gekennzeichnet, dass** die Parameter des auf Basis des ersten und zweiten Differentialgleichungssystems entworfenen Zustandsbeobachters als Funktionen von zumindest einer sich während des Betriebs der Prüfstandsanordnung (4) ändernden, in der Prüfstandsanordnung (4) vorherrschenden rotatorischen Größe gewählt werden, um die Parameter des Zustandsbeobachters und damit den Zustandsbeobachter an Änderungen der zumindest einen in der Prüfstandsanordnung (4) vorherrschenden rotatorischen Größe anzupassen.

5. Verfahren nach einem der vorhergehenden Ansprüche, **dadurch gekennzeichnet, dass** der rotierende Prüfling (1) über zumindest eine weitere mechanische Wellenverbindung (3') mit zumindest einer weiteren rotierenden Belastungsmaschine (2') verbunden ist **und dass** die zumindest eine weitere rotierende Belastungsmaschine (2') zusätzlich zur bestehenden rotierenden Belastungsmaschine (2) als Aktuator bei der Regelung von zumindest einer in der Prüfstandsanordnung (4) vorherrschenden Regelungswinkelgeschwindigkeit und/oder von zumindest einem in der Prüfstandsanordnung (4) vorherrschenden Regelungsdrehmoment herangezogen wird.

6. Prüfstand, umfassend eine Prüfstandsanordnung (4), bei welcher ein rotierender Prüfling (1) über eine mechanische Wellenverbindung (3) mit einer rotierenden Belastungsmaschine (2) verbunden ist und welche ausgestaltet ist, zumindest eine in der Prüfstandsanordnung (4) vorherrschende Winkelgeschwindigkeit messtechnisch zu erfassen, und ein Automatisierungssystem (5), welches ausgestaltet ist, das rotatorische Verhalten der Prüfstandsanordnung (4) und damit das dynamische Verhalten zumindest der gemessenen Winkelgeschwindigkeit und einer im Prüfling (1) vorherrschenden Prüflingswinkelgeschwindigkeit ($\omega_P$) mit einem ersten Differentialgleichungssystem zu modellieren, **dadurch gekennzeichnet, dass** das Automatisierungssystem (5) ausgestaltet ist,

- das vom Prüfling (1) erzeugte Prüflingsdrehmoment ($T_P$) mit einem zweiten Differentialgleichungssystem zu modellieren und dabei anhand eines ersten Subsystems des zweiten Differentialgleichungssystems den Gleichanteil des Prüflingsdrehmoments ($T_P$) und anhand einer Anzahl m weiterer, oszillierender Subsysteme des zweiten Differentialgleichungssystems in Form gedämpfter und/oder ungedämpfter Oszillatoren m Oberwellen des Prüflingsdrehmoments ($T_P$) abzubilden,
- auf Basis des ersten und des zweiten Differentialgleichungssystems einen Zustandsbeobachter zur Schätzung der Prüflingswinkelgeschwindigkeit ($\omega_P$) und des Prüflingsdrehmoments ($T_P$) zu entwerfen, wobei die gemessene Winkelgeschwindigkeit einen Eingang des Zustandsbeobachters darstellt,
- anhand des Zustandsbeobachters Schätzwerte der Prüflingswinkelgeschwindigkeit ($\hat{\omega}_P$) und des Prüflingsdrehmoments ($\hat{T}_P$) zu ermitteln und
- die ermittelten Schätzwerte von Prüflingswinkelgeschwindigkeit ($\hat{\omega}_P$) und Prüflingsdrehmoment ($\hat{T}_P$) zur Regelung zumindest einer in der Prüfstandsanordnung (4) vorherrschenden Regelungswinkelgeschwindigkeit und/oder zumindest eines in der Prüfstandsanordnung (4) vorherrschenden Regelungsdrehmoments heranzuziehen.

## Claims

1. Method for controlling a test bench arrangement (4) in which a rotating specimen (1) is connected to a rotating loading machine (2) via a mechanical shaft connection (3) and in which at least one angular velocity prevailing in the test bench arrangement (4) is measured, the rotational behavior of the test bench arrangement (4) and thus the dynamic behavior at least of the measured angular velocity and of a specimen angular velocity ($\omega_\rho$) prevailing in the specimen (1) being modeled using a first system of differential equations, **characterized in that**

- the specimen torque ($T_\rho$) generated by the specimen (1) is modeled using a second system of differential equations, the direct component of the specimen torque ($T_\rho$) being modeled on the basis of a first subsystem of the second system of differential equations, and m harmonics of the specimen torque ($T_\rho$) being modeled on the basis of a number m of further oscillating subsystems of the second system of differential equations in the form of damped and/or undamped oscillators,
- a state observer for estimating the specimen angular velocity ($\omega_\rho$) and the specimen torque ($T_\rho$) is designed based on the first and the second system of differential equations, the measured angular velocity representing an input of the state observer,
- estimates of the specimen angular velocity ($\hat{\omega}_P$) and of the specimen torque ($\hat{T}_\rho$) are determined by means of the state observer, and
- the determined estimates of the specimen angular velocity ($\hat{\omega}_P$) and of the specimen torque ($\hat{T}_\rho$) are used to control at least one control angular velocity prevailing in the test bench arrangement (4) and/or at least one control torque prevailing in the test bench arrangement (4).

**2.** Method according to claim 1, **characterized in that,** by means of the state observer, in addition to the estimates of the specimen angular velocity $(\hat{\omega}_P)$ and of the specimen torque $(\hat{T}_\rho)$ an estimate of a shaft torque $(\hat{T}_{ST})$ and/or an estimate of a load angular velocity $(\hat{\omega}_P)$ are determined, which are also used to control at least one control angular velocity prevailing in the test bench arrangement (4) and/or at least one control torque prevailing in the test bench arrangement (4).

**3.** Method according to claim 1 or 2, **characterized in that** the parameters of the second system of differential equations for modeling the specimen torque $(T_\rho)$ are selected as functions of at least one rotational variable which changes during the operation of the test bench arrangement (4) and prevails in the test bench arrangement (4), in order to adapt the parameters of the second system of differential equations, and thus the second system of differential equations, to changes in the at least one rotational variable prevailing in the test bench arrangement (4).

**4.** Method according to claim 3, **characterized in that** the parameters of the state observer designed on the basis of the first and second system of differential equations are selected as functions of at least one rotational variable which changes during the operation of the test bench arrangement (4) and prevails in the test bench arrangement (4), in order to adapt the parameters of the state observer, and thus the state observer, to changes in the at least one rotational variable prevailing in the test bench arrangement (4).

**5.** Method according to any of the preceding claims, **characterized in that** the rotating specimen (1) is connected via at least one further mechanical shaft connection (3') to at least one further rotating loading machine (2'), **and that** the at least one further rotating loading machine (2') is used in addition to the existing rotating loading machine (2) as an actuator in the control of at least one control angular velocity prevailing in the test bench arrangement (4) and/or of at least one control torque prevailing in the test bench arrangement (4).

**6.** Test bench comprising a test bench arrangement (4) in which a rotating specimen (1) is connected to a rotating loading machine (2) via a mechanical shaft connection (3) and which is designed to detect, by measurement, at least one angular velocity prevailing in the test bench arrangement (4), and an automation system (5) which is designed to model the rotational behavior of the test bench arrangement (4) and thus the dynamic behavior of at least the measured angular velocity and a specimen angular velocity $(\omega_\rho)$ prevailing in the specimen (1) using a first system of differential equations,
**characterized in that** the automation system (5) is further designed

- to model the specimen torque $(T_\rho)$ generated by the specimen (1) using a second system of differential equations and thereby model the direct component of the specimen torque $(T_\rho)$ on the basis of a first subsystem of the second system of differential equations, and model m harmonics of the specimen torque $(T_\rho)$ on the basis of a number m of further oscillating subsystems of the second system of differential equations in the form of damped and/or undamped oscillators,
- on the basis of the first and the second differential equations, to design a state observer for estimating the specimen angular velocity $(\omega_\rho)$ and the specimen torque $(T_\rho)$, the measured angular velocity representing an input of the state observer,
- to determine the specimen angular velocity $(\hat{\omega}_P)$ and the specimen torque $(\hat{T}_\rho)$ by means of the state observer, and
- to use the determined estimates of specimen angular velocity $(\hat{\omega}_P)$ and specimen torque $(\hat{T}_\rho)$ for controlling at least one control angular velocity prevailing in the test bench arrangement (4) and/or at least one control torque prevailing in the test bench arrangement (4).

**Revendications**

**1.** Procédé pour la régulation d'un agencement de banc d'essai (4), dans lequel un échantillon d'essai (1) rotatif est relié à une machine de charge (2) rotative par l'intermédiaire d'une liaison d'arbres (3) mécanique et dans lequel au moins une vitesse angulaire prédominant dans l'agencement de banc d'essai (4) est mesurée, dans lequel le comportement en rotation de l'agencement de banc d'essai (4) et ainsi le comportement dynamique au moins de la vitesse angulaire mesurée et d'une vitesse angulaire d'échantillon d'essai $(\omega_P)$ prédominant dans l'échantillon d'essai (1) sont modélisés avec un premier système d'équations différentielles, **caractérisé en ce que**

- le couple d'échantillon d'essai $(T_P)$ produit par l'échantillon d'essai (1) est modélisé avec un second système d'équations différentielles, dans lequel la composante continue du couple d'échantillon d'essai $(T_P)$ est représentée à l'aide d'un premier sous-système du second système d'équations différentielles et m composantes harmoniques du couple d'échantillon d'essai *(T$_P$)* sont représentées à l'aide d'un nombre m d'autres sous-systèmes oscillants du second système d'équations différentielles sous forme d'oscillateurs amortis et/ou non amortis,

- sur la base du premier et du second système d'équations différentielles, un observateur d'état permettant d'estimer la vitesse angulaire d'échantillon d'essai *(ω$_P$)* et le couple d'échantillon d'essai *(T$_P$)* est configuré, dans lequel la vitesse angulaire mesurée constitue une entrée de l'observateur d'état,
- des valeurs estimées de la vitesse angulaire d'échantillon d'essai *($\hat{ω}_P$)* et du couple d'échantillon d'essai *($\hat{T}_P$)* sont déterminées à l'aide de l'observateur d'état et
- les valeurs estimées déterminées de la vitesse angulaire d'échantillon d'essai *($\hat{ω}_P$)* et du couple d'échantillon d'essai *($\hat{T}_P$)* sont utilisées pour la régulation d'au moins une vitesse angulaire de régulation prédominant dans l'agencement de banc d'essai (4) et/ou d'au moins un couple de régulation prédominant dans l'agencement de banc d'essai (4).

2. Procédé selon la revendication 1, **caractérisé en ce qu'à** l'aide de l'observateur d'état, outre les valeurs estimées de la vitesse angulaire d'échantillon d'essai *($\hat{ω}_P$)* et du couple d'échantillon d'essai *($\hat{T}_P$)*, une valeur estimée d'un couple d'arbre *($\hat{T}_{ST}$)* et/ou une valeur estimée d'une vitesse angulaire de charge *($\hat{ω}_D$)* sont déterminées, lesquelles sont également utilisées pour la régulation d'au moins une vitesse angulaire de régulation prédominant dans l'agencement de banc d'essai (4) et/ou d'au moins un couple de régulation prédominant dans l'agencement de banc d'essai (4).

3. Procédé selon la revendication 1 ou 2, **caractérisé en ce que** les paramètres du second système d'équations différentielles pour la modélisation du couple d'échantillon d'essai *(T$_P$)* sont choisis en fonction d'au moins une grandeur rotative prédominant dans l'agencement de banc d'essai (4), laquelle grandeur rotative varie pendant le fonctionnement de l'agencement de banc d'essai (4), afin d'adapter les paramètres du second système d'équations différentielles et donc le second système d'équations différentielles à des variations de l'au moins une grandeur rotative prédominant dans l'agencement de banc d'essai (4).

4. Procédé selon la revendication 3, **caractérisé en ce que** les paramètres de l'observateur d'état configuré sur la base des premier et second systèmes d'équations différentielles sont sélectionnés en fonction d'au moins une grandeur rotative prédominant dans l'agencement de banc d'essai (4), laquelle grandeur rotative varie pendant le fonctionnement de l'agencement de banc d'essai (4), afin d'adapter les paramètres de l'observateur d'état et ainsi l'observateur d'état à des variations de l'au moins une grandeur rotative prédominant dans l'agencement de banc d'essai (4).

5. Procédé selon l'une des revendications précédentes,
**caractérisé en ce que** l'échantillon d'essai (1) rotatif est relié à au moins une autre machine de charge (2') rotative par l'intermédiaire d'au moins une autre liaison d'arbres (3') mécanique et **en ce que** l'au moins une autre machine de charge (2') rotative est utilisée comme actionneur en plus de la machine de charge (2) rotative existante lors de la régulation d'au moins une vitesse angulaire de régulation prédominant dans l'agencement de banc d'essai (4) et/ou d'au moins un couple de régulation prédominant dans l'agencement de banc d'essai (4).

6. Banc d'essai, comprenant un agencement de banc d'essai (4), dans lequel un échantillon d'essai (1) rotatif est relié à une machine de charge (2) rotative par l'intermédiaire d'une liaison d'arbres (3) mécanique, et lequel est configuré pour détecter par mesure au moins une vitesse angulaire prédominant dans l'agencement de banc d'essai (4), et un système d'automatisation (5) qui est configuré pour modéliser le comportement en rotation de l'agencement de banc d'essai (4) et donc le comportement dynamique d'au moins la vitesse angulaire mesurée et d'une vitesse angulaire d'échantillon d'essai *(ω$_P$)* prédominant dans l'échantillon d'essai (1) avec un premier système d'équations différentielles,
**caractérisé en ce que** le système d'automatisation (5) est configuré pour

- modéliser le couple d'échantillon d'essai *(T$_P$)* produit par l'échantillon d'essai (1) avec un second système d'équations différentielles et, ainsi, à l'aide d'un premier sous-système du second système d'équations différentielles, représenter la composante continue du couple d'échantillon d'essai *(T$_P$)* et, à l'aide d'un nombre m d'autres sous-systèmes oscillants du second système d'équations différentielles, m composantes harmoniques du couple d'échantillon d'essai *(T$_P$)* sous la forme d'oscillateurs amortis et/ou non amortis,
- configurer, sur la base du premier et du second système d'équations différentielles, un observateur d'état permettant d'estimer la vitesse angulaire d'échantillon d'essai *(ω$_P$)* et le couple d'échantillon d'essai *(T$_P$)*, dans lequel la vitesse angulaire mesurée constitue une entrée de l'observateur d'état,
- déterminer, à l'aide de l'observateur d'état, des valeurs estimées de la vitesse angulaire d'échantillon d'essai

($\hat{\omega}_P$) et du couple d'échantillon d'essai ($\hat{T}_P$) et

- utiliser les valeurs estimées déterminées de la vitesse angulaire d'échantillon d'essai ($\hat{\omega}_P$) et du couple d'échantillon d'essai ($\hat{T}_P$) pour la régulation d'au moins une vitesse angulaire de régulation prédominant dans l'agencement de banc d'essai (4) et/ou d'au moins un couple de régulation prédominant dans l'agencement de banc d'essai (4).

Fig. 1

Fig. 2

Fig. 3

EP 4 348 211 B1

Fig. 4

Fig. 5

EP 4 348 211 B1

Fig. 6

**IN DER BESCHREIBUNG AUFGEFÜHRTE DOKUMENTE**

**In der Beschreibung aufgeführte Patentdokumente**

- DE 102008041883 A1
- AT 519092 A4
- AT 522354 A4
- DE 102020104314 A1

**In der Beschreibung aufgeführte Nicht-Patentliteratur**

- **G. REALE et al.** Nonlinear Observers for Closed-Loop Control of a Combustion Engine Test Bench. *American Control Conference*, 2009, 4648-4653